(19) Europäisches Patentamt
European Patent Office
Office européen des brevets

(11) EP 1 022 106 A1

(12) EUROPEAN PATENT APPLICATION
published in accordance with Art. 158(3) EPC

(43) Date of publication:
26.07.2000 Bulletin 2000/30

(21) Application number: 98937835.1

(22) Date of filing: 14.08.1998

(51) Int. Cl.[7]: **B29C 41/52**, B29C 41/50, B29C 41/24, G01N 21/89, G01N 27/92
// C08J5:18, (B29K77/00, B29L7:00)

(86) International application number:
PCT/JP98/03637

(87) International publication number:
WO 99/08853 (25.02.1999 Gazette 1999/08)

(84) Designated Contracting States:
AT BE CH CY DE DK ES FI FR GB GR IE IT LI LU MC NL PT SE

(30) Priority: 14.08.1997 JP 23188297
16.02.1998 JP 4855298

(71) Applicant:
Asahi Kasei Kogyo Kabushiki Kaisha
Osaka-shi, Osaka 530-8205 (JP)

(72) Inventors:
- NAGASAWA, Keisaku
Nobeoka-shi, Miyazaki 882-0051 (JP)
- KASUGA, Masahiro
Nobeoka-shi, Miyazaki 882-0866 (JP)
- TANIGUCHI, Takenori
Nobeoka-shi, Miyazaki 882-0036 (JP)

(74) Representative:
Strehl Schübel-Hopf & Partner
Maximilianstrasse 54
80538 München (DE)

# (54) ARAMID FILM AND ITS USE, METHOD OF MANUFACTURING THE SAME, DETECTION OF PINHOLES IN THE FILM, AND DEVICE FOR THE DETECTION

(57) The present invention discloses a thin aramid film which has an average thickness of from 1 to 9 µm and 20/1,000 $m^2$ and less of pinholes, detected by a current flow during the application of a voltage satisfying the formula mentioned below, and which is used as a base material of a magnetic tape:

detection voltage (V) = 20 x (average thickness of the film represented by micrometers).

In the production of an aramid film by a film-forming method wherein a solution of an aramid resin is cast from a die in an atmosphere having a cleanness of up to JIS class 6, and the cast resin is subjected to wet treatment at a solvent removal rate of $3 \times 10^{-5}$ g/sec • µm • $cm^2$ and less to form a solidified film, the thin aramid film of the present invention is produced by continuously inspecting the film for pinholes in an area of at least 500 $m^2$ with an optical pinhole inspection apparatus and a current application type of pinhole detection apparatus.

The locations of pinholes in the longitudinal and transverse directions of the film can be calculated and outputted if necessary.

EP 1 022 106 A1

Fig. 1

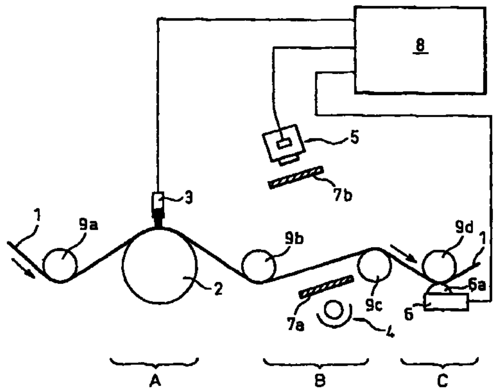

## Description

### Technical Field

The present invention relates to a thin aramid film, particularly to an aramid film having a decreased number of fine pinholes, and to an aramid film on which the locations of fine pinholes are specified.

The present invention also relates to the use and production method of the aramid film, and a method of inspecting a film containing fine pinholes and an appropriate apparatus used for the inspection.

### Background Art

The aramid films, to which attention has been paid recently due to their heat resistance and excellent mechanical properties, have come to be utilized as base films of image transfer sheets for thermal recording and magnetic tapes for high density recording because the films satisfy the rigidity and heat resistance requirements necessary for handling even when they are thin.

The presence of various defects in the films caused by mixing of extreaneous or foreign substances, mixing of gelled resin and the like, cannot be avoided. One instance of the defects is a hole. Holes formed in the film range from large boles having a diameter of at least several centimeters to so-called pinholes having a diameter of 2 - 3 mm and less. When films are formed from resin solutions, the films contain foam-like defects called voids, defects each formed by the depression of the surface of the foam-like defect, and recesses each formed by the removal of one wall on one side of the foam-like defect, although such defects are not holes.

The presence of pinholes in a film is not substantially not permitted when the film is used as an insulating material. However, for a heat-resistant resin having an extremely high or no melting point, the solution method must be used in the production of a film. For a thin film thus produced, it is almost impossible to form no voids and pinholes. The thin film has principally been used as the base film of a magnetic tape, a thermosensible transfer ink sheet or the like, in which presence of a given amount of pinholes is permitted.

In order to decrease the number of pinholes, it has heretofore been practiced to filter out foreign materials mixed with the resin solution (hereinafter referred to as "the dope") which cause formation of pinholes with a high efficiency filter such as a sintered metallic nonwoven cloth capable of filtering out materials having a particle size of, for example, 10 µm or more (refer to, for example, Japanese Unexamined Patent Publication (Kokai) No. 8-147664). Moreover, it has been proposed to use, as a casting belt, a belt having a decreased number of surface scratches and containing a reduced amount of inclusions such as rust formed by impurities of the belt material (Japanese Unexamined Patent Publication (Kokai) No. 9-1568).

Japanese Unexamined Patent Publication (Kokai) No. 8-279139 proposes to decrease the number of recesses having a diameter of 200 µm or more, which are not pinholes, in the base film of a magnetic tape for the purpose of similarly increasing the quality of the tape, and recommends to cast a resin in a clean atmosphere of up to class 1,000 (U.S. Federal Standard 209 D: corresponding to JIS class 6) and less in the production of a film such as a polyester film.

A method of observing part of a film with the naked eye or a microscope of 50 magnifications has been conducted as a method for detecting defects including pinholes as disclosed in, for example, Japanese Unexamined Patent Publications (Kokai) No. 8-279139 and No. 9-1568. Even the type and size of even small defects can be specified most accurately with a microscope. However, in reality, practicing observation of a film in an area of 10 $m^2$ as specified by Japanese Unexamined Patent (Kokai) No. 9-1568 is difficult. Since such a method employs sampling inspection of a film in a restricted range, the practical value of the method is lessened when the frequency of occurrence of defects is lowered because the inspection does not become evaluation of the entire film.

On the other hand, continuous detection of defects including pinholes on a film has also been carried out over the entire film in the step of producing or processing the film (e.g., Japanese Unexamined Patent Publication (Kokai) No. 62-138740). However, an optical method of detecting pinholes, etc., by observing pinholes, etc., with a CCD camera or the like, converting the observed results into electric signals, and computationally processing the electric signals naturally has a limit as to the size of a detectable pinhole. Many proposals have been made to increase the detection sensitivity of optical pinhole detectors. For example, an attempt to detect pinholes having a diameter of up to about 100 µm has been made using UV-rays in Japanese Unexamined Patent Publication (Kokai) No. 8-338814. The size of a pinhole usually detectable by commercially available optical pinhole detection systems remains about 200 µm or more. Moreover, since the systems detect a pinhole by a difference in intensity of transmitted light, they can even detect a recess, which is a problem disclosed in Japanese Unexamined Patent Publication (Kokai) No. 8-279139, and they also have the problem that they cannot discriminate between a pinhole and a recess. Furthermore, Japanese Unexamined Patent Publication (Kokai) No. 6-18445 proposes a method wherein polarizers are further inserted and placed on both respective sides of a film at a specific orientation, and a difference between brightness and darkness in a pinhole

portion is enhanced. The method is further applied, and defects such as a fine pinhole can be detected by enhancing and detecting birefringence caused by structure strain of the film around the periphery of the pinhole and foreign materials as brightness and darkness with the polarizers. However, there is the problem that pinholes cannot be discriminated from other defects.

According to the above-mentioned methods which decrease the amount of foreign materials in the films, the number of pinholes which can be controlled by conventional optical pinhole detection apparatuses can be decreased to about 10 - 100/1,000 $m^2$. However, when the film is used as, for example, the base film of a coating type of magnetic tape, such problems as explained below arise. Of pinholes with a diameter of 200 μm and less which cannot be detected by these optical pinhole detection apparatuses, a large pinhole also forms a pinhole in the magnetic tape to cause errors. Moreover, even for a pinhole which is so fine that it does not form a pinhole in the magnetic tape, the magnetic coating material penetrates through the pinhole to the backside of the film to stain supporting rolls and the like, in the coating line; the staining is transferred to other portions of the magnetic tape to stain the magnetic layer, which increases the error rate of the magnetic tape. In particular, when a more uniform coating film is to be obtained with a die coater while the magnetic coating material is made thixotropically viscous, there arises the following problem: the magnetic coating material penetrates even through a pinhole as small as up to several tens of micrometers to the backside.

Disclosure of the Invention

An object of the present invention is to provide a thin aramid film of high quality in which optically undetectable fine pinholes are detected, and on which the locations of the pinholes are determined, and products such as a magnetic tape and an image transfer sheets for thermal recording, in which the aramid film is used as a base film, which are excellent in properties and quality can be provided.

Another object of the present invention is to provide a solution method-produced aramid film wherein even optically undetectable fine pinholes are detected and controlled, fine pinholes are decreased, and the locations of fine pinholes on the film surface are determined and specified, and a method of producing the aramid film.

Still another object of the present invention is to provide a method of detecting fine pinholes, on the surface of a film such as an aramid film, which cannot be detected by conventional optical pinhole inspection apparatuses, and obtaining the information of the locations of the pinholes, and an apparatus for detecting fine pinholes.

Brief Description of the Drawings

Fig. 1 is a schematic view illustrating a method of detecting pinholes according to the present invention.
Fig. 2 is a block flow chart showing processing of pinhole-detection signals in the method of detecting pinholes according to the present invention.

The concept and specific embodiments of the present invention will be explained in detail by suitably making reference to the attached drawings.

Through careful observation of the formation of pinholes during the production of an aramid film, the present inventors have confirmed that pinholes are formed not by simple elimination of foreign substances mixed with the film, after film formation but by the action of the foreign materials as a pinhole formation-causing substance at the time of solvent removal by the wet method. The present inventors have further investigated a method capable of controlling the production process and guaranteeing the quality by detecting even pinholes having a smaller size, and thus achieved the objects of the present invention.

That is, the present invention provides an aramid film characterized in that the film has an average thickness of 1 - 9 μm and that pinholes are detected by a current flow during the application of a voltage satisfying the following formula on both sides of the film are 20/1,000 $m^2$ and less:

detection voltage (V) = 20 x (average thickness of the film represented by micrometers).

The film of the present invention has an average thickness of 1 - 9 μm, more preferably 2 - 6 μm. Formation of pinholes is often decreased when the film has an average thickness exceeding 9 μm; the film is unsuitable for a base film when the film has an average thickness less than 1 μm. Accordingly, such films are not the object of the present invention.

The pinholes in the film of the present invention detected by a current flow in the pinhole portions during the application of a voltage satisfying the following formula, 20 x (average thickness of the film represented by micrometers)

(V), on both sides of the film (hereinafter referred to as current-application detection) are 20/1,000 $m^2$ and less, preferably 10/1,000 $m^2$ and less, more preferably 5/1,000 $m^2$ and less. The method detects pinholes including those having a diameter of not exceeding 200 μm, and satisfies the object of the present invention.

Since the electric current-application detection system can detect still smaller pinholes by increasing the detection voltage, it is preferred that the following films be specified by the number of pinholes detected by applying a still higher detection voltage: a film which is used in the fields of insulation and diaphragms and in which the presence of still smaller pinholes is not permitted; and a film for which detection and control of pinholes having a still smaller diameter are desired because even pinholes having a diameter of several tens of micrometers in the film used as a base film in the method of applying in multilayers a magnetic material coating solution having a thixotropic viscosity, which method is being carried out in the production of a high density recording magnetic tape, causes the problem that the coating solution flows out on the backside thereof. For such purposes, pinholes having a diameter as small as several tens of micrometers are detected by applying a voltage satisfying the formula, 80 x (average thickness of the film represented by micrometers) (V), and a film having 30/1,000 $m^2$ and less, preferably 20/1,000 $m^2$ and less, more preferably 10/1,000 $m^2$ and less of such pinholes is desired.

Recesses and foams which are not pinholes but which have an extremely thin film remaining are sometimes present in a film. Such recesses and foams are subjected to dielectric breakdown in actual application of the film, or are broken by frictional force or tension in a processing step to cause substantially the same problems as caused by pinholes. The pinhole inspection by the current-application detection system of the present invention is capable of detecting the thin film portions as pinholes by dielectric breakdown, and more practical detection of the thin film portions as pinholes is also a feature of the present invention.

Detection of pinholes in the film is conducted in the film production step, or in the slitting or coating-applying step subsequent to the film production. It is desirable to detect pinholes along the entire length and over the entire width of the film to become a product, namely, to continuously inspect substantially over the entire surface of the film. However, when the thin film portions are not intended to be ruptured into pin holes due to dielectric breakdown under an application of the detection voltage as explained above, the following are also permitted: part of the product film is inspected at suitable intervals, or the front and back portions of the product film in the same lot are inspected, and the results in terms of per 1,000 $m^2$ are allowed to represent the entire film. The area to be inspected is at least 500 $m^2$, preferably at least 1,000 $m^2$. Moreover, for a film having a decreased number of pinholes, the product is desirably inspected continuously over the entire surface. When the inspection area is less than that mentioned above, there is the possibility that the inspection does not provide reliability as an inspection of a film for an extremely small number of pinholes, which is the subject of the present invention.

In the practice of the present invention, the presence of pinholes having a diameter of at least 200 μm which can be detected by the conventional optical pinhole inspection apparatus may also be confirmed. When the aramid film of the present invention is thus inspected, the number of pinholes detected is 2/1,000 $m^2$ and less, preferably 1/1,000 $m^2$ and less, more preferably not exceeding 0.5/1,000$m^2$. When the number of pinholes having a diameter of 200 μm or more exceeds 2/1,000 $m^2$, the pinholes unpreferably lower the yield of the final product in addition to the backside staining and the staining of the coater caused by the penetration of the coating in the coating step. In addition, pinholes having a diameter of at least about 200 μm can be detected by commercially available defect inspection apparatuses which count the pinholes by, for example, a method wherein the differences of the quantity of transmitted or reflected light in a pinhole portion are converted into electric signals as a CCD camera image, and the signals are image processed. The size of a pinhole herein is represented by the maximum diameter.

In the practice of the present invention, information on the locations of pinholes in the longitudinal and transverse directions of the film is obtained during the production of products by processing a film, by a method comprising: specifying the locations of pinholes in the longitudinal direction of the film with a current-application detection type of pinhole detection apparatus; specifying the locations of defective portions in the longitudinal and transverse directions with an optically defective portion inspection apparatus for detecting defective portions including pinholes of the film, comprising a light source and a light receiving part having an imaging device which are oppositely arranged while forming a space where the film can travel; and collating both pieces of information. When the film is to be processed to give a product, there is the advantage that a means for increasing the yield such as excluding the portions having pinholes can be taken in advance from the information on the locations of the pinholes having been obtained, and the method is a preferred embodiment of the present invention.

Since the method of obtaining information on the locations of pinholes in a film by a combination of the current-application detection type of pinhole inspection apparatus and the optically defective portion inspection apparatus is a novel one, the method will be explained in detail by making reference to figures. However, the present invention is in no way restricted thereto.

Inspection of fine pinholes in a film of the present invention is carried out with an apparatus for inspecting fine pinholes of a film comprising a combination of the following: a current-application detection type of pinhole inspection apparatus of a film comprising a pair of electrodes placed on a stand, and arranged opposite to each other so that

the film to be inspected can travel therebetween while contacted therewith, a means for applying a voltage thereto, and a means for detecting a current flow generated therebetween; an optically defective portion inspection apparatus comprising a light source and a light receiving camera having an imaging device, both being placed on a stand and oppositely arranged while a space is formed between them where the film to be inspected can travel, and a means for distinguishing the optical brightness and darkness of a defective portion of the film as electric signals; a longitudinal location detection apparatus for a traveling film; and a means into which longitudinal location signals of the film, detection signals of current flows generated between the electrodes and optically defective portion detection signals are inputted, and which collates these pieces of information, specifies the locations of pinholes by signal processing, and displays the locations.

Fig. 1 schematically shows the embodiment of the method of inspecting fine pinholes of a film of the present invention wherein the fine pinhole inspection apparatus of a film is applied to a traveling film in the production step of the film, or the like step. For convenience of explanation, Fig. 1 shows only the essential portions of the related apparatuses such as the current-application detection type of pinhole inspection apparatus.

In Fig. 1, a film 1 travels along the surfaces of guide rolls 9a, 9b, 9c, 9d, etc., in the directions of the arrows, and is taken off toward, for example, a winder. In the traveling path of the film is placed a fine pinhole inspection apparatus for a film comprising a combination of a current-application detection type of pinhole inspection apparatus designated by A, an optically defective portion inspection apparatus designated by B, a longitudinal location detection apparatus for a traveling film designated by C and an arithmetic processing means 8 which calculates the locations of pinholes from signals transmitted from the apparatuses mentioned above and displays the locations.

In Fig. 1, the film 1 passes through a pair of electrodes 2, 3 of the current-application detection type of pinhole inspection apparatus designated by A while contacted with both electrodes. When the film passes therethrough, a pinhole is detected by a current flow in the pinhole portion present in the film caused by a voltage applied thereto. The film subsequently passes through a space between a light source 4 and a CCD camera 5, which is a light receiving part having an imaging device such as a charge coupled device (CCD), of the optically defective portion inspection apparatus designated by B, and optically defective portions including pinholes present in the film are electrically detected as brightness and darkness. Thereafter, information on the location of the traveling film in the longitudinal direction is continuously detected by the longitudinal location detection apparatus for a traveling film designated by C. The locations of the pinholes and those of the defective portions are thus specified.

Fig. 2 shows a block flow chart of signal processing for detecting the locations of fine pinholes in the present invention. A video signal 31 generated from the CCD camera 5 is compared with a comparison voltage 43 obtained from a comparison voltage generator 42 within an information processor, and further compared with a detection range signal 45 from a detection range signal generator 44, whereby defect signal detection 33 is conducted; determination of a transverse location of a defect 34 is performed by a scanning start signal 47 from a scanning start signal generator 41, and transverse directional location storage 35 is conducted. On the other hand, length measuring pulses 20 are continuously transmitted from a length measuring machine 6, and the location in the longitudinal direction of the film is taken in as integration of the pulses by an inspection start input signal 40; reading of a measured length integration value of defect 50 is conducted simultaneously with the defect signal detection 33 in the transverse direction, and the read value is stored as information on the location in the longitudinal direction.

A pinhole detection signal 10 is transmitted from the current-application detection type of pinhole detection apparatus designated by A, and reading of a measured length integration value of a formed pinhole 11 is conducted similarly to conducting the reading of a measured length integration value of a formed detective portion mentioned above.

Collation and determination 51 of both measured length integration values thus reading is conducted, and the defective portion at which both values agree is determined to be a pinhole; reading of transverse directional location of defect portion 36 is conducted from a transverse directional location storage 35; the read values are outputted as information on the transverse directional and longitudinal locations.

Next, the construction of each portion of the fine pinhole detection apparatus in the present invention will be explained in more detail by making reference to Fig. 1. A film 1 travels via a guide roll 9a along a metal roll type of first electrode 2 having a width larger than that of the film at a speed equal to that of the metal roll. A second electrode 3 having a width smaller than that of the film is arranged so that the film can travel between the second electrode 3 and the first electrode 2. A current-application detection type of pinhole inspection apparatus is formed by applying a voltage between the first and second electrodes. When there is a pinhole in the film, both electrodes are contacted with each other, or a gas discharge takes place, or the like phenomenon occurs to allow a current to flow between both electrodes, by which the pinhole is detected. The results are inputted into an information processor 8.

On the other hand, information on the location of the film in the longitudinal direction is continuously inputted into the information processor 8 by a length measuring machine 6 of a longitudinal location detection apparatus C for a film; a pinhole detection signal 10 is used as a trigger, and reading of a measured length integration value of a formed pinhole 11 is conducted from length measuring pulse integration 21 to give information on the location of the pinhole in

the longitudinal direction, which is stored in the means for reading of a measured length integration value of a formed pinhole 11.

The first electrode herein is placed so that the electrode is contacted with the film in the transverse direction. Any of the following electrodes can be used as the first one: a freely rotatable roll type of electrode which is the same as in the present embodiment; a fixed type of plate, bar or line electrode; and a bundle of conductive fibers such as carbon fibers, fibers of metal such as amorphous metal and stainless steel, and synthetic fibers plated with metal. The first electrode may suitably be selected while the thickness, flexibility, surface properties, etc., of the film are taken into consideration. Moreover, any of the following electrodes may be used as the freely rotatable roll type of electrode: a roll type of electrode which is connected to a driving motor and rotates autonomously; a roll supported on the ball bearing which can rotate following the traveling of the film without having a positive driving device, etc., as an intermediate design, and having a structure following the motion of the film and not applying a load thereto. The roll type of electrode may be suitably selected in accordance with the properties and application of the film. The width of the first electrode is selected so that it is approximately equal to or larger than that of the second electrode, and it may usually be determined to be larger than that of the film. However, the width may optionally be determined to be narrower than that of the film.

The second electrode having such a size in the transverse direction of the film that pinholes can be measured and the electrode does not extend over the full width of. Any of the electrodes selected from the following materials or the like, can be used as the second electrode in accordance with the purpose: a bundle of conductive fibers such as carbon fibers, fibers of metal such as amorphous metal and stainless steel and synthetic fibers plated with metal; and a metallic molded article in a plate or bar form.

Dividing the first and/or the second electrode in the transverse, direction is also a preferred embodiment of detecting pinholes while the approximate pinhole locations in the transverse direction are classified.

The voltage applied to both electrodes may be a direct or alternating current.

The film 1 is subsequently guided to the optically defective portion inspection apparatus B via the guide roll 9b, travels in a space between the light source 4 and the CCD camera 5 which is a light receiving part having an imaging device such as a charge coupled device (CCD), and optically defective portions such as pinholes of the film are optically detected. The optical brightness and darkness of defect portions of pinholes and others in video signals of the CCD camera 5 scanning in the transverse direction of the film are numerically processed by the information processor 8, and the locations in the transverse direction of the film are calculated and stored. Reading of a measured length integration of defect 50 is simultaneously conducted by length measuring pulse integration 21 using a defect detection signal 33 as a trigger. Next, collation of information on locations of pinholes stored in the information processor from the current-application detection type of pinhole inspection apparatus and the length measuring machine 6 is performed; of defective portions detected by the optically defective portion inspection apparatus, only the defective portions the locations in the longitudinal direction of which agree with those of the detected pinholes are extracted, and determined to be pinholes. The information on the locations of the optically defective portions is outputted as information on the locations of pinholes in the transverse and longitudinal directions of the film.

In order to make detection of a defective portion easy, the strain near the defective portion can be made easily detectable as brightness and darkness by placing polarizers 7a, 7b as shown in Fig. 1, adjusting the respective angles of linear polarization in accordance with the average orientation degree of the film, and adjusting the light quantity of the background. The procedure is a preferred embodiment of the present invention.

In the practice of the present invention, there is no specific limitation on the quality and type of the light source. The light source may suitably be selected from incandescent lamps, fluorescent lamps, mercury lamps, halogen lamps, laser light, UV-ray lamps and the like. In order to make light from such a light source uniform or condense the light, combining the light source with lenses is also a preferred embodiment.

The pixels of the imaging device may be arranged in a row or in a plane. In the detection of pinholes of a conventional film, the detection is often practiced while the film is allowed to travel continuously. Inspection of the film is therefore required to be carried out without substantial interruption in the traveling direction of the film. The pixels of the imaging device and therefore preferred to be arranged in a row, and the arranged row is preferred to be placed in the transverse direction of the film. Although the resolution of detection naturally differs depending on the speed of scanning for detection in the transverse direction and the traveling speed of the film, increasing the resolution, detection with a broad field of view and double inspection can be carried out by arranging a plurality of the imaging devices in the transverse direction if necessary.

Examples of the defective portion other than a pinhole detected by the optically defective portion inspection apparatus include such foreign materials mixed with the film as inorganic materials, foreign polymers and decomposed materials of polymers, dust sticking to the film in the production step of the film and scratches formed in the production step. Various defective portions are detected when the resolution and sensitivity of the optical detection apparatus are increased, and discrimination of pinholes becomes difficult. However, in the present invention, the current-application detection type of pinhole inspection apparatus which detects even fine pinholes with high sensitivity is employed, and information on pinholes together with information on the locations thereof in the longitudinal direction of the film can be

obtained. Accordingly, pinholes alone can be distinguished from defective portions detected with the optically detective portion detection apparatus by collating the above information, and the locations of the pinholes in the longitudinal and transverse directions can be specified.

There is no specific limitation on the longitudinal location detection system of the film longitudinal location detection apparatus C. In the embodiment in Fig. 1, measuring is conducted by contacting a roll 6a of a roll type of length measuring machine 6 with the film surface on the guide roll 9d of a film. Measuring may also be conducted on another guide roll, as another method. As to the length measuring machine 6, an arbitrarily selected length measuring system other than that mentioned above, such as a method wherein the number of revolutions of the guide roll itself is measured, and the number is converted into the feed of the film may be adopted.

In the practice of the present invention, the installation of the optically defective portion inspection apparatus in front of the current-application detection type of pinhole inspection apparatus in the order opposite to that mentioned above also produces similar effects. Therefore, the installation may arbitrarily be practiced. Moreover, it is also possible to install a static eliminator, a dust collector, a clean air unit, a speedometer, etc., (not shown) in parallel with these inspection apparatuses.

The method and system of detecting pinholes including even fine ones in a film and obtaining information on the locations by combining the current-application detection type of pinhole inspection apparatus and the optically defective potion inspection apparatus are also effective in a film other than the aramid film; moreover, there is no specific limitation on the thickness of the film.

In the practice of the present invention, forming marks on the film indicating a pinhole in accordance with the information on the location thereof is also a preferred embodiment. Either forming the marks at the location thereof or around the periphery thereof on the film surface, or forming the marks at the location in the longitudinal direction alone in the selvedge or crosswise edge portion of the film may be selected in accordance with the applications. There is no specific limitation on the method of forming marks. Examples of the method of forming the marks include a method of applying or spraying a dye, a pigment, etc., and a method of attaching an adhesive tape, etc.

The aramid film of the present invention to be used as a base film of a magnetic tape desirably has a strength of 25 kg/mm$^2$ or more and an elastic modulus of 800 kg/mm$^2$ or more bath in the cross and longitudinal directions in view of handling the film during the film processing and the output characteristics of the magnetic tape. In order to realize such properties, para-oriented aramid in which the aromatic groups forming the polymer are bonded together at positions para to each other is preferred. These properties may be approximately equal both in the transverse and longitudinal directions, that is, the aramid is a so-called balanced type. Alternately, these properties may be more improved either in the transverse direction or in the longitudinal direction by a factor of about 1.1 to 1.6, that is, the aramid may be a so-called tensilized type.

When the film is used as a base film for a magnetic tape, a magnetic layer is formed on one side of the film.

Examples of a method of forming a magnetic layer of a magnetic tape include a method comprising applying to a film a magnetic coating material in which powder of ferromagnetic material such as iron oxide, chromium oxide, barium ferrite, metallic iron or iron-cobalt alloy is dispersed into various binders, using a gravure coater, a microgravure coater, a die coater, or the like, and a method of laminating such ferromagnetic metal as mentioned above as a metallic thin film to a film by gas phase precipitation such as vapor deposition, sputtering or ion plating. A method of multilayer application of coating in which a magnetic layer coating is simultaneously applied in multilayers to a nonmagnetic layer coating material having a thixotropic viscosity may preferably be conducted as an application method of coating because the method can make the magnetic layer thin and increase the high frequency output.

After forming the magnetic layer, a back coat layer having a known composition is preferably formed on the side opposite to the side having the magnetic layer by a known method for reasons of improving the traveling performance and the like, of the tape.

The film having a magnetic layer thus formed is slit to have a given width, optionally housed in a cassette, and used as a magnetic tape.

Although there is no specific limitation on the applications of the magnetic tape of the present invention, it is preferably used for broadcasting business, digital video, data storage or the like, wherein high density recording is advanced, because of its preferred error characteristics.

The aramid of the present invention is substantially formed from units selected from the group consisting of the following structural units:

$$-NH-Ar_1-NH- \qquad (1)$$

$$-CO-Ar_2-CO- \qquad (2)$$

$$-NH-Ar_3-CO- \qquad (3)$$

wherein $Ar_1$, $Ar_2$ and $Ar_3$ are each a bivalent group containing at least one aromatic ring, and the units (1) and (2) are substantially equimolar when present in a polymer. Typical examples of such bivalent aromatic groups are as follows:

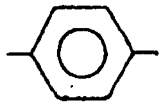

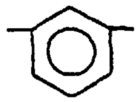

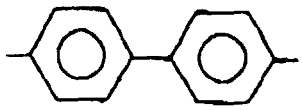

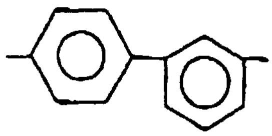

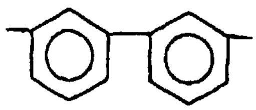

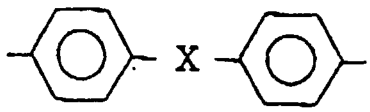

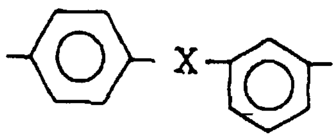

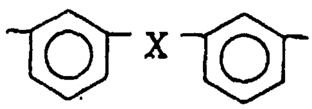

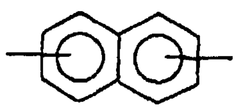

wherein X is a group selected from -O-, $-CH_2-$, $SO_2-$, -S-and -CO-. Moreover, part of the hydrogen atoms of these aromatic rings may also be replaced with halogen, a nitro group, a sulfone group, an alkyl group, an alkoxy group, etc.

$Ar_1$, $Ar_2$ and $Ar_3$ may each include at least two different groups, or may be the same, or may differ.

In order to realize good mechanical properties in the present invention, $Ar_1$, $Ar_2$ and $Ar_3$ are each preferred to be a para-oriented type of group.

The term "para-oriented type" herein means that the bond directions of the main chains in the aromatic ring are para to each other, or that the bond directions of the main chains at both ends in the residue comprising at least two aromatic rings are coaxial or parallel.

The aramid used in the present invention can be produced from diamines, dicarboxylic acids and aminocarboxylic acids corresponding to the respective units by known methods. Specifically, carboxyl groups are first converted into acid halides, acid imidazolides, esters, etc., and the converted substances are reacted with amino groups. Polymerization can be carried out by so-called solution polymerization at low temperatures, interfacial polymerization, fusion polymerization, solid phase polymerization and the like.

The aramid used in the present invention may also be copolymerized with up to about 10% by mole of structural units other than those mentioned above, or it may be blended with other polymers. The most typical aramid used in the present invention is poly(p-phenyleneterephthalamide) (PPTA). Examples of aramids comparable thereto are substituted PPTA obtained by introducing a substituting group such as a chloro group into PPTA and aramid obtained by introducing a copolymerization component into the substituted PPTA to some extent.

In order to improve lubricity among the films or prevent a blocking phenomenon, the film of the present invention is permitted to contain fine particles (hereinafter referred to as a lubricant) in a mixture. There are organic compounds and inorganic compounds usable as lubricants. Examples of the lubricants which are usually used include inorganic compounds such as $SiO_2$, $TiO_2$, ZnO, $Al_2O_3$, $CaSO_4$, $BaSO_4$, $CaCO_3$, carbon black, zeolite and other metal powder. The particle size and the addition amount which are often selected are from 10 to 200 nm and from 0.01 to 2% by weight, respectively. Excessively large aggregates of a lubricant should be avoided in view of the object of the present invention. The object of the present invention can be achieved when the average aggregation degree is from 1 to 100, preferably from 1 to 20, more preferably from 1 to 10.

The film of the present invention may contain colorants such as dyes and pigments, flame-retardants, antistatics, antioxidants, other modifiers and other polymers so long as these substances do not impair the object of the present invention.

Good products can be provided from the film of the present invention particularly when the film is used as a base film of a high density recording magnetic tape, a sublimation type of image transfer sheet for thermal recording and the like. However, the applications of the film are not particularly restricted.

When the film of the present invention is prepared by wet film forming from, for example, a sulfuric acid dope of PPTA or an organic solvent dope of aramid soluble in an organic solvent, the dope is filtered by a conventional method, cast from a die in an atmosphere having a cleanness of up to JIS class 6, optionally subjected to isomerization treatment of the liquid crystal dope or the like treatment, and wet treated under the condition of an average solvent removal rate of up to $3 \times 10^{-5}$ g/sec • µm • $cm^2$ and less to be solidified.

Furthermore, when a film is formed by the dry wet method from an aramid dope with an organic solvent to which an inorganic salt such as calcium chloride is added as a solubilizer, a similarly filtered dope is cast in an atmosphere having a cleanness of JIS class 6 and less, and part of the organic solvent is removed by drying with a heated gas having the same cleanness to such a degree that the inorganic salt does not precipitate. The dope is subsequently wet treated until at least 30% of the remaining organic solvent is removed under the condition of an average solvent removal rate of $3 \times 10^{-5}$ g/sec • µm • $cm^2$ and less to give a film. During drying the organic solvent, excessive drying is not preferred because the inorganic salt as a solubilizer precipitates to form pinholes, or causes pinholes to form in the subsequent wet treatment.

The atmosphere of casting designates the entire peripheral region including the die, the casting drum or the belt, and is controlled to have a cleanness of up to JIS class 6, preferably up to JIS class 5, more preferably up to JIS class 4 and less. Mixing of foreign materials from the atmosphere during casting not only stains the film, but also leads to the formation of voids and pinholes with the foreign materials contained as nuclei during wet solvent removal. The definition of the cleanness of an atmosphere is based on the specification of JIS B9920-88, and U.S. Federal Standard 209D classes 1, 10, 100, 1,000 and 10,000 correspond to JIS classes 3, 4, 5, 6 and 7, respectively.

Furthermore, the average solvent removal rate is an amount of solvent (inorganic salt as solubilizer being excluded) removed from the film by wet treatment, divided by a wet treatment time and a thickness and expressed by a value per unit time per unit thickness. However, the thickness is defined as explained below. The thickness is an average thickness of a swelling film after solvent removal. When the cast dope is subjected to solvent removal from one side thereof on a belt, the thickness designates a total thickness. On the other hand, when the cast dope is subjected to solvent removal from both sides, the thickness designates a half of the thickness.

In the practice of the present invention, it is important that the solvent be removed by the wet method at an

average solvent removal rate of 3 x $10^{-5}$ g/sec • µm • $cm^2$ and less, more preferably 1.5 x $10^{-5}$ g/sec • µm • $cm^2$ and less. When the solvent removal rate is too large, formation of voids specific to wet solidification makes pinhole formation easy. Accordingly, an excessive solvent removal rate should be avoided.

In the practice of the present invention, a lubricant may also be dispersed into the dope. However, since the presence of excessively large aggregates may cause pinhole formation, sufficient attention should be paid to the dispersion of the lubricant. The object of the present invention can be achieved so long as the average aggregation degree of the lubricant is from 1 to 100, preferably from 1 to 20, more preferably from 1 to 10. The surface roughness in terms of mean deviation surface roughness (SRa) of the aramid film thus obtained is from 1 to 10 nm.

During the dispersion of a lubricant in the dope, a sufficient dispersed state cannot be attained when the lubricant alone is directly added to the dope. Accordingly, direct addition should be avoided. A lubricant is dispersed into the dope by methods such as mentioned below: a method wherein a lubricant is dispersed in advance into a solvent used in the polymerization of the resin mentioned above; and a method wherein a lubricant is dispersed in advance into a solvent used for redissolving the resin, or part of the solvent is taken out, and the lubricant is dispersed thereinto, followed by adding the dispersion to the dope and blending the mixture.

A lubricant may be dispersed by using various homogenizers. In particular, the use of an ultrasonic homogenizer is recommended because of its excellent dispersion force. The following method of improving the dispersion state of the lubricant is preferred to realize a dispersion state with an average aggregation degree of 10 and less: a commercially available colloidal monodisperse system of the lubricant is diluted, and the diluted system is used. However, care should be exercised in employing the method, because the lubricant tends to show aggregation depending on the solvent used and dilution conditions, and desired effects are sometimes difficult to obtain. In particular, since the colloidal lubricant tends to aggregate when an amide solvent in which an inorganic salt is dissolved as a dissolution assistant or concentrated sulfuric acid is used as a solvent, it is important to exercise care as mentioned below: the colloidal dispersion is once diluted with the same solvent as that of the dispersion, and the diluted dispersion is mixed with a solvent with adequate agitation in which a resin is to be dissolved.

Prior to using the dispersion of a lubricant, in which the lubricant is dispersed into a solvent, for polymerization or dissolution of a resin, it is important to filter the dispersion with a filter capable of filtering out at least 98% by weight of particles having a particle size of, for example, at least 5 µm, to remove nondispersed or aggregated lubricant. Moreover, since a lubricant having once been finely dispersed often aggregates with time, it is preferred to use the dispersion quickly after dispersion. Although there is no specific limitation on the type of filters used herein, examples of the filters are a filter formed with sintered metal or carbon particles, a sintered woven or nonwoven cloth of metallic fibers, a plastic film provided with fine pores, and the like.

In the practice of the present invention, it is preferred to remove foreign materials in a dope with a high efficiency filter prepared by, for example, sintering a woven or nonwoven cloth of metallic fibers and capable of filtering out foreign materials having a particle size of at least 10 µm, preferably at least 5 µm, in the same manner as has been conventionally conducted.

In the production of the film of the present invention, foreign materials should be prevented from being attached to the dope cast from a die. Therefore, the casting atmosphere should be controlled to have a cleanness of class 6 and less, preferably class 5 and less, more preferably class 4 and less. It is preferred to maintain the cleanness mentioned above until the dope is subjected to treatment such as isomerization and solvent evaporation so that the foreign materials in the atmosphere do not invade the dope.

When a method is adopted wherein the dope is once cast on a belt, and the cast dope is solidified by the dry wet method or the wet method, care should be taken to, for example, use the belt for casting from which a film has been removed and which is made in a clean state by cleaning the belt of a solvent, a solubilizer, film dust etc., with clean water or the like, from which foreign materials are adequately eliminated.

The film thus formed is optionally subjected to neutralization treatment of the acid by-produced during polymerization or used for dissolution, and washed with water or warmed water, and optionally with an organic solvent for the purpose of removing a solvent and a solubilizer such as an inorganic salt.

The washed film is then dried. However, the film can also be stretched prior to drying, if desired. That is, the wet film prior to drying can be uni- or bidirectionaly stretched by a factor of about 1.01 - 1.4 to improve the mechanical properties.

The film is preferably dried while the film is being held under tension or at a constant length, or the film is being slightly stretched. Methods for conducting such drying include, for example, a method of drying with a tenter drying machine or a drum drying machine capable of fixing both crosswise edges of the film. The drying temperature is usually selected from a temperature range from 100 to 300°C.

The dried film is optionally heat treated at temperatures of at least 300°C and up to 500°C, and wound around a winding core to give a film roll. The film can be heat treated while held under tension or at a constant length or in a relaxed state. The film can also be heat treated by at least two steps in which a combination of the above procedures is carried out.

In the production of the film of the present invention, the steps mentioned above are preferably carried out in an atmosphere as clean as possible, for example, in a room, etc., where the atmosphere is controlled to have a cleanness of class 7 and less.

In the production of the film of the present invention, the film may be subjected to corona discharge treatment, normal pressure plasma treatment, surface modified coating treatment, antistatic treatment or the like treatment so long as such treatment does not impair the effects of the invention.

In order to detect the pinholes of the film of the present invention, the following is permitted: an optical inspection apparatus capable of detecting pinholes having a diameter of about 200 μm or more and/or a current-application detection type of inspection apparatus which detects pinhole portions by applying a voltage on both sides of the film are placed in a suitable step mentioned above, and pinholes are detected simultaneously with the production of the film. Pinholes can naturally be detected after winding the film once by conducting a procedure such as rewinding. Although the inspection apparatuses used herein can be assembled by the producers themselves, the apparatuses can also be suitably selected from commercially available ones, and used.

In the practice of the present invention, the detection voltage of the current-application detection type of pinhole inspection apparatus should be determined from the following formula:

detection voltage (V) = K x (average thickness of the film represented by micrometers)

wherein K should be in the range from 20 to 80. When K is 20 and less, only pinholes having such a size that conventional optical inspection apparatuses can detect them can be detected, and the object of the present invention cannot be achieved. Moreover, when K is larger than 80, portions of the film other than pinholes are sometimes partially subjected to dielectric breakdown unpreferably.

Best Mode for Carrying Out the Invention

The present invention will be explained in more detail by making reference to examples, etc., to show the effects of the invention. However, the present invention is in no way restricted thereto. Moreover, percentages, etc., in examples are based on weight unless other wise noted. Furthermore, the cleanness of an atmosphere is entirely based on JIS (B9920-88). In addition, the specific values of the films in examples were obtained by the following measurement methods.

Measurement methods of film properties:

(1) Method of measuring the thickness, strength, elongation and elastic modulus of a film

The thickness of a film is randomly measured at ten points of the film by a digital electronic micrometer (trade name of K351C, manufactured by Anritsu Corporation) using a probe having a diameter of 2 mm, and is expressed by the average value.

The strength, elongation and elastic modulus are measured with a constant extension rate type of tensile tester (trade name of Autograph AGS-1000G, manufactured by Shimazu Corporation) while the measured length and the tensile rate are set at 100 mm and 50 mm/min, respectively.

(2) Method of measuring the average aggregation degree of fine particles

A thin sample having a thickness of about 100 nm is cut out from a film by a conventional method, and observed with a transmission electron microscope (trade name of JEM200FX, manufactured by JEOL) of 50,000 magnifications. The number of fine particles forming each of at least fifty fine aggregates (including those each composed of a single particle), from a plurality of fields if necessary, is counted, and the number is expressed by an average value.

Example 1

A colloidal silica dispersion containing 40% of spherical silica having an average particle size of about 80 nm in water was diluted with distilled water to a concentration of 5%. The diluted dispersion was added to 101% sulfuric acid with stirring, and the resultant mixture was filtered through a filter made of a sintered stainless nonwoven cloth having a cut-size of 3 μm to give concentrated sulfuric acid containing 0.035% of silica. PPTA was dissolved in the thus obtained concentrated sulfuric acid in which silica had been dispersed, so that the polymer concentration became 12%, thereby giving a dope of PPTA. The dope irregularly reflected light when stirred, and showed the optical anisotropy that it changed a dark field of the cross nicol of a polarization microscope to a bright field when the dope was observed with an optical microscope, and the like properties. That is, the dope was seen to be in a liquid crystal state.

The PPTA dope was filtered through a filter made of a sintered stainless nonwoven cloth having a cut-size of 5 μm, and cast at a draft rate of 1.2 from a die on a mirror-finished and tantalum-made endless belt in an atmosphere

of class 4. Air of up to class 4 having a dew point of 12°C was heated to 80°C, and blown to the cast dope on the belt so that the dope was subjected to phase transformation from a liquid crystal phase to an isotropic phase. The cast dope was then solidified at -10°C in 45% sulfuric acid to form a swelling film. The solvent removal rate at this time was 1.1 x $10^{-5}$ g/sec • μm • $cm^2$.

The swelling film was then neutralized, washed with water, stretched by a factor of 1.1 in the longitudinal direction, and further stretched by a factor of 1.1 in the transverse direction while both crosswise edges of the film were being held with clips. The film was dried by hot air, and heat treated at 430°C while the crosswise edges were still being held and a state of constant length of the film was being maintained. The portions held with the clips were slit and removed to give a film having a width of 550 mm.

The film was continuously allowed to travel, and consecutively inspected for pinholes by the following two apparatuses: an optical pinhole inspection apparatus wherein the film was irradiated with light from a 40-W fluorescent lamp as a light source on one side of the film, the transmitted image of the film was taken in a CCD camera (trade name of TI5000F, manufactured by Excel) having a number of pixels of 5,000, the entire width of the film was scanned, and pinholes were detected by a change in the intensity of the transmitted light; and a pinhole detection apparatus of a current-application detection type of pinhole detection apparatus (trade name of PFVI-1AVR, manufactured by Kasuga Electric Works Ltd.) wherein a brush type of carbon fibers electrode, the tips of which were contacted with the film surface, was placed on the film over approximately the entire width, and a metallic roll type of electrode contacted with the lower surface of the film and rotated at the same line speed as that of the film was placed opposite to the brush type of electrode. An inspected film having a length of 6000 m was wound.

The PPTA film thus obtained had an average thickness of 4.5 μm. The number of pinholes of the whole film detected by the optical pinhole inspection apparatus and having a diameter of at least 200 μm was 1.5/1,000 $m^2$ on the average. The number of pinholes detected by a current flow was 3.6/1,000 $m^2$ when a detection voltage of 90 V was applied, and 8.5/1,000 $m^2$ when the detection voltage was changed to 360 V. The physical properties of the film were as follows: strengths of 42 and 43 kg/$mm^2$ in the longitudinal and transverse directions, respectively; elongations of 14 and 12% in the longitudinal and transverse directions, respectively; an elastic modulus of 1,510 and 1,510 kg/$mm^2$ in the longitudinal and transverse directions, respectively; and an average aggregation degree of silica of 2.4.

Comparative Example 1

A PPTA film was produced and wound in the same manner as in Example 1 except that the cast and isomerized dope was solidified in 20% sulfuric acid at 10°C at a solvent removal rate of 4.7 x $10^{-5}$ g/sec • μm • $cm^2$.

The PPTA film thus obtained had a thickness of 4.5 μm. The number of pinholes of the whole film detected by the optical pinhole inspection apparatus and having a diameter of at least 200 μm was 6.1/1,000 $m^2$ on the average. The number of pinholes detected was 126/1,000 $m^2$ when a detection voltage of 90 V was applied, and 230/1,000 $m^2$ when a detection voltage of 360 V was applied. The physical properties of the film were the same as in Example 1, and the average aggregation degree was also the same.

Comparative Example 2

A PPTA film was produced and wound in the same manner as in Example 1 except that the dope was cast in an atmosphere of class 7.

The PPTA film thus obtained had an average thickness of 4.5 μm. The number of pinholes of the whole film detected by the optical pinhole inspection apparatus and having a diameter of at least 200 μm was 21.3/1,000 $m^2$ on the average. The number of pinholes detected was 106/1,000 $m^2$ when a detection voltage of 90 V was applied, and 209/1,000 $m^2$ when a detection voltage of 360 V was applied. The physical properties of the film were the same as in Example 1, and the average aggregation degree was also the same.

Reference Example 1

Fifty pinholes having a diameter of 30 μm were formed by means of eximer laser on the PPTA film obtained in Example 1 at intervals of 1 m. Fifty pinholes having a diameter of 80 μm were then similarly formed thereon, and 50 pinholes having a diameter of 150 μm were also similarly formed thereon. The film was inspected with the optical pinhole inspection apparatus and the current-application detection type of pinhole inspection apparatus in Example 1, and the detection state of the pinholes was confirmed.

Although the optical pinhole inspection apparatus could detect none of the pinholes, the current-application detection type of pinhole inspection apparatus could detect 60% of the pinholes having a diameter of 150 μm, 32% of the pinholes having a diameter of 80 μm and 0% of the pinholes having a diameter of 30 μm when the detection voltage was 90 V. When the detection voltage was 360 V, the apparatus could detect 100% of the pinholes having a diameter

of 150 µm and 80 µm, and 60% of the pinholes having a diameter of 30 µm.

Reference Example 2

Each of the pinholes detected in Example 1 was microscopically observed, and it is understood that one of them was a pinhole having been formed by destroying a recessed portion having a remaining thin film by electric discharge in view of the scatter of the film powder and the pinhole form. It is expected that such a recessed portion is subjected to dielectric breakdown to become a pinhole when the film is practically used, and causes a problem.

Example 2

A dope was prepared in the same manner as in Example 1 except that the aramid was changed from PPTA to a poly(2-chloro-p-phenyleneterephthalamide) (Cl-PPTA), and that the polymer concentration was changed to 13%. The dope was similarly cast from a die, and isomerized. The isomerized dope was subjected to solvent removal in 50% sulfuric acid at -5°C where the average solvent removal rate was 1.3 x $10^{-5}$ g/sec • µm • $cm^2$, and a Cl-PPTA film was produced in the same manner as in Example 1.

The film thus obtained had an average thickness of 4.5 µm. The number of pinholes of the whole film detected by the optical pinhole inspection apparatus and having a diameter of at least 200 µm was 1.8/1,000 $m^2$ on the average. The number of pinholes detected was 7.0/1,000 $m^2$ at a detection voltage of 90 V and 15.5/1,000 $m^2$ at a detection voltage of 360 V. The physical properties of the film were as follows: strengths of 37 and 35 kg/$mm^2$ in the longitudinal and transverse directions, respectively; elongations of 18 and 17% in the longitudinal and transverse directions, respectively; elastic moduli of 1,230 and 1,200 kg/$mm^2$ in the longitudinal and transverse directions, respectively; and an average aggregation degree of silica of 2.5.

Example 3

A PPTA film was produced in the same manner as in Example 1 except for the following procedures: the sulfuric acid in which colloidal silica was dispersed and which was used for dissolving PPTA was filtered through a fluororesin fiber filter with a cut-size of 1 µm; the dope was cast in an atmosphere of JIS class 2; and the cast dope was solidified in 50% sulfuric acid at -20°C, and the average solidification rate was changed to about 0.8 x $10^{-5}$ g/sec • µm • $cm^2$.

The PPTA film thus obtained had an average thickness of 4.5 µm. The number of pinholes of the whole film detected by the optical pinhole inspection apparatus and having a diameter of at least 200 µm was 0.3/1,000 $m^2$ on the average. The number of pinholes detected at a detection voltage of 90 V was 1.5/1,000 $m^2$ and those detected at a detection voltage of 360 V was 3.6/1,000 $m^2$. The physical properties of the film were as follows: strengths of 42 and 43 kg/$mm^2$ in the longitudinal and transverse directions; respectively; elongations of 14 and 12% in the longitudinal and transverse directions, respectively; elastic moduli of 1,510 and 1,510 kg/$mm^2$ in the longitudinal and transverse directions, respectively; and an average aggregation degree of silica of 2.1.

Example 4

Using a microgravure type of test coater 500 mm wide, a magnetic coating was applied to each of the films obtained in Examples 1 to 3, and Comparative Examples 1 to 2 to form a coating having a dried thickness of about 2 µm. The magnetic coating material used had the following composition:

| | |
|---|---|
| magnetic powder (Fe type of metal powder, specific surface area of 50 $m^2$/g) | 100 parts |
| polyurethane resin | 5 parts |
| vinyl chloride resin | 10 parts |
| plasticizer | 3 parts |
| polyisocyanate | 4 parts |
| methyl ethyl ketone | 140 parts |
| toluene | 90 parts |

Pinholes were detected and recorded simultaneously with the application of the coating by a transmitted light type of pinhole tester which was attached to the coater and which was capable of detecting pinholes having a diameter of up to about 150 μm. The stains of coating smearing the support roll of the coater after the application of the coating and the backside of the coated base film were observed with the naked eye, whereby the penetration of the magnetic coating material through pinholes of the film and the backside flow state of the coating were inspected.

The numbers of pinholes detected during the application of coating in examples were as follows: 1.5/1,000 $m^2$ for the film in Example 1; only 1.1/1,000 $m^2$ therefor in Example 2; and no pinholes therefor in Example 3. On the other hand, the numbers of pinholes detected in comparative examples were as follows: 5.5/1,000 $m^2$ for the film in Comparative Example 1; and 16.4/1,000 $m^2$ therefor in Comparative Example 2. Moreover, for the films in Examples 1 to 3, both the staining of the coater and that of the backsides of the base films were to a negligible degree; however, in both comparative examples, the staining of the roll of the coater was significant, and not only the backside flow from pinholes but also the transfer of the staining of the roll to sites other than pinholes was observed.

Example 5

Primer coating of the nonmagnetic layer alone was conducted as a model of the production of a magnetic tape by the application of coating showing thixotropic viscosity in multilayers.

A coating test was practiced in the same manner as in Example 4 except that the coater was changed to a die coater, and part of the magnetic coating mentioned below was applied from the slit to the film pressed to the die and allowed to travel while the coating material was allowed to flow through the manifold of the die. Pinholes and penetration of the coating subsequent to application of the coating was observed.

The nonmagnetic coating material used had the following composition:

| | |
|---|---|
| particulate titanium oxide | 100 parts |
| carbon black | 5 parts |
| α-alumina | 5 parts |
| vinyl chloride copolymer | 8 parts |
| cyclohexanone | 150 parts |
| methyl ethyl ketone | 50 parts |

The numbers of pinholes detected were as follows: 1.1/1,000 $m^2$ in Example 1; 1.5/1,000 $m^2$ in Example 2; 0/1,000 $m^2$ in Example 3; 5.8/1,000 $m^2$ in Comparative Example 1; and 20/1,000 $m^2$ therefor in Comparative Example 2. The numbers of stains on the support roll on the backside of the coater after the application of the coating were as follows: 6.9/1,000 $m^2$ in Example 1; 13.1/1,000 $m^2$ in Example 2; 2.9/1,000 $m^2$ in Example 3; and at least 100/1,000 $m^2$ in Comparative Examples 1 and 2.

Reference Example 3

Ten pinholes having a diameter of 30 μm were formed at intervals of 2 m on a poly(p-phenyleneterephthalamide) (PPTA) film (trade name of Aramica, product of Asahi Chemical Industries Co., Ltd.) having a width of 508 mm and a thickness of 16 μm, using a carbon dioxide gas laser to give a test film. A current-application detection type of pinhole inspection apparatus was used as a pinhole inspection system, and an AC voltage of 800 V was applied. An optically defective portion inspection apparatus was operated in the following manner: a halogen lamp (trade name of Linear Bright PDL-S, manufactured by Nihon B I K.K.) was used as a light source; polarizers inclined at an angle of 75° were placed; and the transmitted light was received by a CCD camera (trade name of TI5000F, manufactured by Excel) having 5,000 bits of pixels. The image information of the CCD was scanned in the cross section at intervals of 1 msec; the analogue signals were digitized, and a defective portion of the film was recognized as brightness and darkness; and the location in the transverse direction and the location in the longitudinal direction obtained from the information of a length measuring machine were stored. The location in the longitudinal direction of the pinhole having been detected by the current-application detection type of pinhole inspection apparatus was collated, and the location both in the transverse and longitudinal directions was determined. When the film was allowed to travel at a rate of 10 m/min, all the pinholes could be detected together with the information on their locations. In addition, defective portions detected by the optically defective portion inspection apparatus were much more than pinholes, and were 45 in number.

Example 6

The pinhole inspection system in Reference Example 3 was installed, and an AC voltage of 360V was applied to the current-application detection type of pinhole inspection apparatus. The procedure of Example 3 was repeated to produce a PPTA film having a width of 550 mm and a length of 6,000 m. Ten pinholes in total (3.0/1,000 $m^2$) were detected, and the locations were as shown in Table 1. Each of the locations was microscopically observed, and the sizes of the pinholes were confirmed. The results are as shown in Table 1. It is understood that even pinholes having very small diameters could be correctly detected. In addition, the diameter of each of the pinholes was expressed by the average of the major and minor axes. Moreover, although 36 portions were detected as defective ones by the optically defective portion inspection apparatus, none of them could be clearly identified as pinholes.

Table 1

| Locations and Sizes of Detected Pinholes | | | |
|---|---|---|---|
| No. | Location of pinhole | | Size of pinhole (μm) |
| | Longitudinal direction (m) | Transverse direction (from right end, cm) | |
| 1 | 625 | 120 | 50 |
| 2 | 947 | 95 | 35 |
| 3 | 1520 | 243 | 25 |
| 4 | 1833 | 30 | 55 |
| 5 | 3330 | 345 | 170 |
| 6 | 3587 | 340 | 85 |
| 7 | 3967 | 480 | 50 |
| 8 | 4467 | 210 | 30 |
| 9 | 5213 | 75 | 150 |
| 10 | 5507 | 120 | 20 |

Industrial Applicability

The aramid film according to the present invention is a conveniently usable thin aramid film of high quality wherein fine pinholes undetectable by optical methods are detected, and, in a preferred mode, their locations on the film surface are determined and specified.

Accordingly, when the aramid film according to the present invention is used as a base film, not only the problems of degrading the properties of the final products and lowering the yield caused by pinholes themselves having a diameter of at least about 200 μm but also the problems of the backside flow of the magnetic coating material through fine pinholes and staining of the coater due to the backside flow are solved, and the influence of transfer of the staining on the product quality is reduced. Use of the aramid film as the base film of a high density recording magnetic tape therefore provides a magnetic tape with a low error rate in a good yield. Furthermore, for use of the aramid film as the base film of a multi-type sublimation type of image transfer sheet for thermal recorder, the present aramid film provides an image transfer sheet or ribbon of good printing quality.

Since the inspection of defects and product control of films can be carried out efficiently and effectively by the detection method and the detection apparatus for pinholes, etc., according to the present invention, valuable thin films of high quality including aramid films, can be prepared and provided significantly efficiently.

**Claims**

**1.** An aramid film, characterized in that the film has an average thickness of from 1 to 9 μm, and that pinholes detected by a current flow during the application of a voltage satisfying the following formula on both sides of the film are 20/1,000 $m^2$ and less:

detection voltage (V) = 20 x (average thickness of the film represented by micrometers).

**2.** The aramid film according to claim 1, wherein the voltage applied to both sides of the film satisfies the following formula:

detection voltage (V) = 80 x (average thickness of the film represented by micrometers),

and the pinholes detected by a current flow are up to 30/1,000 $m^2$ and less.

**3.** The aramid film according to claim 1 or 2, wherein the pinholes are detected substantially over the entire surface of the film by a current flow during the application of a detection voltage on both sides of the film.

**4.** The aramid film according to any one of claims 1 to 3, wherein information on the locations of each of the pinholes in the longitudinal and transverse directions of the film are specified by the steps of: specifying pinhole locations in the longitudinal direction of the film with an apparatus which detects pinholes of a film by a current flow during the application of a detection voltage between electrodes arranged on both respective sides of the film; specifying the locations of defective portions in the longitudinal and transverse directions of the film with an apparatus which optically detects defective portions and which comprises a light source and a light receiving part having an imaging device, both being oppositely arranged on both respective sides of the film; and collating the two pieces of information on the locations.

**5.** The aramid film according to any one of claims 1 to 4, wherein the aramid is para-oriented aramid, and the film has a strength of 25 kg/$mm^2$ or more and an elastic modulus of at least 800 kg/$mm^2$ or more in both the transverse and longitudinal directions.

**6.** A method of producing the aramid film according to any one of claims 1 to 5, wherein the film is formed by casting a solution of an aramid resin from a die, and the film is subjected to finishing treatment such as wash, the method comprising continuously inspecting the film in an area of at least 500 $m^2$ for pinholes with an optical pinhole inspection apparatus capable of detecting pinholes having a diameter of about 200 μm or more, and a current-application detection type of pinhole inspection apparatus which detects pinholes having a diameter of less than 200 μm by a current flow during the application of a voltage between electrodes arranged on both respective sides of the film.

**7.** The method of producing an aramid film according to claim 6, wherein a voltage satisfying the following formula is applied to the electrodes of the current-application detection type of pinhole inspection apparatus:

detection voltage (V) = K x (average thickness of the film represented by micrometers)

wherein K = 20 to 80.

**8.** The method of producing an aramid film according to claim 6 or 7, wherein the locations of pinholes in the longitudinal direction of the film are specified with the current-application detection type of pinhole inspection apparatus, the locations of defective portions in the longitudinal and transverse directions are specified with the optically defective portion detection apparatus comprising a light source and a light receiving part having an imaging device which are arranged on both respective sides of the film, and information on the locations of pinholes in the longitudinal and transverse directions of the film is obtained by collating the two pieces of information on the locations.

**9.** The method of producing an aramid film according to any one of claims 6 to 8, wherein the solution of an aramid resin is cast from a die in a clean atmosphere having a cleanness of up to JIS class 6 and less, and the cast resin is wet treated at a solvent removal rate of $3 \times 10^{-5}$ g/sec • μm • $cm^2$ and less to be solidified to form a film.

**10.** The method of producing an aramid film according to any one of claims 6 to 9, wherein the solution of an aramid resin contains an organic solvent and an inorganic salt as solvents, and part of the organic solvent is dried and removed prior to wet treatment to such an extent that the inorganic salt is not precipitated.

**11.** A magnetic tape comprising a magnetic layer on one side of the aramid film according to any one of claims 1 to 5.

**12.** The magnetic tape according to claim 11, wherein the magnetic layer is provided through an intermediate nonmagnetic layer.

**13.** A method of detecting tine pinholes of a film comprising specifying the locations of pinholes in the longitudinal

direction of a film with an apparatus which detects pinholes of the film by a current flow during the application of a voltage between electrodeS arranged on both respective sides of the film, specifying the locations of defective portions of the film in the longitudinal and transverse directions with a light source and a light receiving part having an imaging device which are oppositely arranged on both respective sides of the film, and collating the two pieces of information on the locations, whereby the information on the locations of pinholes in the longitudinal and transverse directions of the film is obtained.

**14.** The method of detecting fine pinholes according to claim 13, wherein polarizers are inserted and placed between the film and the light source and between the film and the light receiving part having an imaging device, respectively.

**15.** An apparatus for detecting fine pinholes of a film,

comprising an apparatus for specifying the locations of pinholes in the longitudinal direction of the film which comprises a pair of electrodes arranged in such a manner that the film is capable of traveling therebetween while contacted therewith and a means for applying a voltage therebetween, and an apparatus for specifying the locations of defective portions of the film in the longitudinal and transverse directions which comprises a light source and a light receiving part having an imaging device, both being oppositely arranged to form a space where the film is capable of traveling, and

collating both pieces of information to define the locations of pinholes in the longitudinal and transverse directions of the film.

**16.** The apparatus for detecting fine pinholes according to claim 15, wherein polarizers are inserted and placed between the film and the light source and between the film and the light receiving part having an imaging device, respectively.

Fig. 1

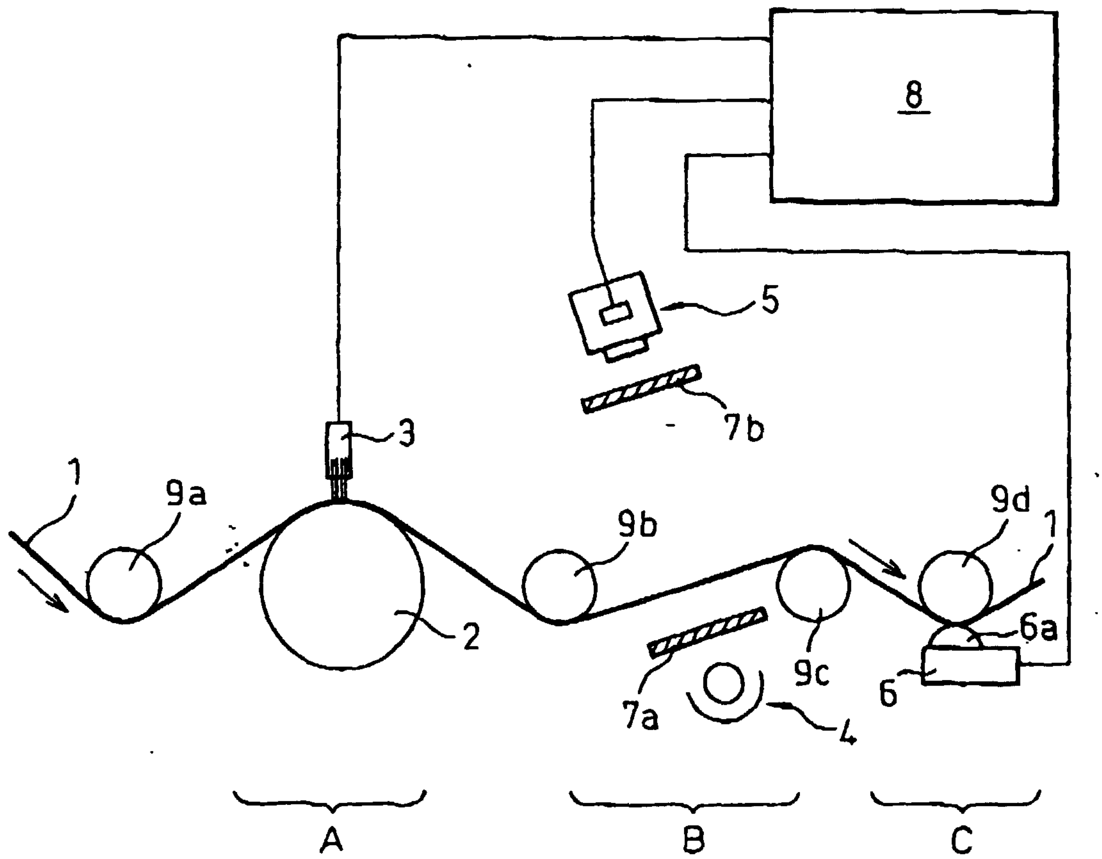

Fig. 2

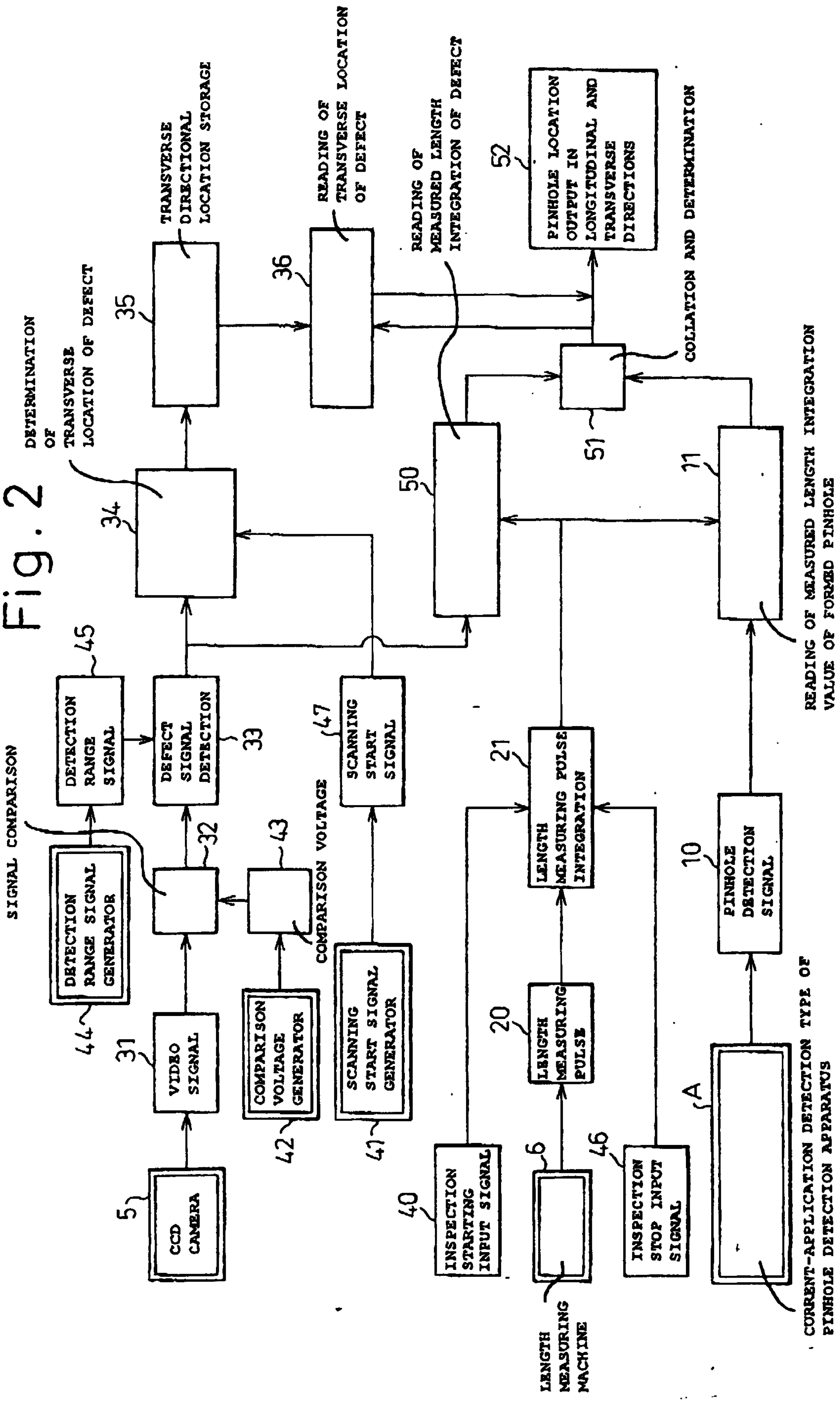
5
CCD CAMERA
31
VIDEO SIGNAL
44
DETECTION RANGE SIGNAL GENERATOR
SIGNAL COMPARISON
32
45
DETECTION RANGE SIGNAL
33
DEFECT SIGNAL DETECTION
42
COMPARISON VOLTAGE GENERATOR
43
COMPARISON VOLTAGE
41
SCANNING START SIGNAL GENERATOR
47
SCANNING START SIGNAL
34
DETERMINATION OF TRANSVERSE LOCATION OF DEFECT
35
TRANSVERSE DIRECTIONAL LOCATION STORAGE
36
READING OF TRANSVERSE LOCATION OF DEFECT
40
INSPECTION STARTING INPUT SIGNAL
6
LENGTH MEASURING MACHINE
20
LENGTH MEASURING PULSE
46
INSPECTION STOP INPUT SIGNAL
21
LENGTH MEASURING PULSE INTEGRATION
50
READING OF MEASURED LENGTH INTEGRATION OF DEFECT
51
COLLATION AND DETERMINATION
COLLATION
52
PINHOLE LOCATION OUTPUT IN LONGITUDINAL AND TRANSVERSE DIRECTIONS
A
CURRENT-APPLICATION DETECTION TYPE OF PINHOLE DETECTION APPARATUS
10
PINHOLE DETECTION SIGNAL
11
READING OF MEASURED LENGTH INTEGRATION VALUE OF FORMED PINHOLE

**INTERNATIONAL SEARCH REPORT**

International application No.
PCT/JP98/03637

A. CLASSIFICATION OF SUBJECT MATTER
Int.Cl$^6$ B29C41/52, B29C41/50, B29C41/24, G01N21/89, G01N27/92 // C08J5/18, B29K77:00, B29L7:00
According to International Patent Classification (IPC) or to both national classification and IPC

B. FIELDS SEARCHED
Minimum documentation searched (classification system followed by classification symbols)
Int.Cl$^6$ B29C41/00-41/52, G01N21/89, G01N27/92 // C08J5/18, B29K77:00, B29L7:00

Documentation searched other than minimum documentation to the extent that such documents are included in the fields searched
Jitsuyo Shinan Koho 1926-1996 Toroku Jitsuyo Shinan Koho 1994-1998
Kokai Jitsuyo Shinan Koho 1971-1998 Jitsuyo Shinan Toroku Koho 1996-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 8-279139, A (Toray Industries, Inc.), 22 October, 1996 (22. 10. 96), Claims ; column 7, line 30 to column 8, line 13 ; column 8, line 50 to column 9, line 27 (Family: none) | 1-12 |
| X<br>Y | JP, 9-5302, A (Dainippon Ink & Chemicals, Inc.), 10 January, 1997 (10. 01. 97), Claims ; Fig. 1 (Family: none) | 13, 15<br>14, 16 |
| Y | JP, 6-18445, A (Toray Industries, Inc.), 25 January, 1994 (25. 01. 94), Claims ; Fig. 1 (Family: none) | 14, 16 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 November, 1998 (10. 11. 98) | 17 November, 1998 (17. 11. 98) |
| Name and mailing address of the ISA/<br>Japanese Patent Office | Authorized officer |
| Facsimile No. | Telephone No. |

Form PCT/ISA/210 (second sheet) (July 1992)